# EUROPEAN PATENT APPLICATION

(11) **EP 1 878 756 A1**
(43) Date of publication of application: **16.01.2008**
(21) Application number: 07013269.1
(22) Date of filing: 06.07.2007
(51) Int. Cl.: C08F 8/00, C08F 10/00

(54) **Labeled tackifiers**

(30) Priority: 10.07.2006 US 484016
(71) Applicant: National Starch and Chemical Investment Holding Corporation, New Castle, Delaware 19720 (US)
(72) Inventor: Chong, Ching Wah, San Francisco, California 94132 (US); Winnik, Michtchell Alan, Toronto, Ontario M6P 1G8 (CA); Zhan, Hao-Quiang, Toronto, Ontario M5T 1m7 (CA); Nowicki, James W., Hopewell, New Jersey 08525 (US); Gong, Lie-Zong, Bridgewater, New Jersey 08807 (US)
(74) Representative: Held, Stephan

(57) **Abstract**

Dye-labeled tackifiers increase dye solubility/compatibility and provide an improved means of introducing dyes into products such as inks, adhesives and coatings. When the dyes are radiation absorbing dyes, the dye-labeled tackifiers can serve as thermal transducers, and can be used in applications where it is required to cause a thermoplastic material to melt or to soften, for example a hot-melt composition.

## Description

### FIELD OF THE INVENTION

This invention relates to labeled tackifiers, more specifically to dye-labeled tackifiers, to methods for the manufacture of such dye-labeled tackifiers, and to compositions comprising dye-labeled tackifiers.

### BACKGROUND OF THE INVENTION

Although polymer matrices containing dyes are available today, they are limited in variety and color intensity. Factors contributing to the color fading include lack of dye solubility in the host matrix, dye migration, and minimal protection against photodegradation.

Many dyes are characterized by having limited solubility or compatibility, both in organic solvents and in polymeric matrices. There is, therefore, a need for a means for providing dyes that have broad solubility or compatibility so that they can be formulated in a wider variety of solvent and/or polymeric systems. Said solvent and/or polymeric systems are useful, for example, as adhesives, inks, coatings, rubbers, thermoplastics, and thermo-sets. Improved solubility or compatibility would also enable formulating at higher dye concentration, allowing for stronger absorptive properties in the solvent or polymeric systems.

Tackifiers are substances of relative low molar mass that are introduced into polymer matrices to improve adhesion properties. Tackifiers often act as plasticizers to reduce polymer viscosity at low shear rates, but they also contribute rigidity at high shear rates. Tackifiers are often an essential component of hot-melt adhesives, used for example in packaging and labeling.

Tackifiers exhibit broad solubility or compatibility when formulated in a variety of polymeric systems.

Rosin acids and their derivatives have been used as tackifiers for over 100 years. Not only are they useful, but also they are inexpensive, since they are normally obtained from the spent cooking liquor from Kraft pulping operations.

Rosin and its derivatives are broadly used in adhesives, inks, and coatings industries. Rosin is a mixture of abietic acid isomers. Typical rosin derivatives include polymerized rosin with various molecular weight and softening points, pentaerythritol ester of rosin, glycerol ester of rosin, hydrogenated rosin, as well as others.

It is known to use infrared radiation to produce temperatures sufficient to cause thermoplastic materials to soften or for their surface to melt. However, most thermoplastic materials only absorb infrared radiation weakly and, as a result, heating takes place slowly and with poor energy efficiency. To aid with this heating process, radiation absorbing substances, such as carbon black, have been incorporated in the thermoplastic material for the purpose of increasing thermal absorption and reducing heating time.

However, if the amount of absorbent substance is high, absorption of radiation takes place mainly at the surface of the thermoplastic material, increasing the time required to complete the melting and thus reducing efficiency. Also, the presence of a significant amount of absorbent substance may cause a reduction in mechanical performance of the thermoplastic material. Conversely, if a lesser amount of absorbent substance is used higher heating power is required and this can cause excessive overheating of the surface parts of the thermoplastic material and degrade it thermally.

There is thus a need in the art for dyes that have broad solubility or compatibility so that they can be formulated in a wider variety of solvent and/or polymeric systems. The current invention addresses this need.

### SUMMARY OF THE INVENTION

It has now been discovered that dye characteristics, such as absorption characteristics, are retained while the solubility or compatibility of dyes in product can be dramatically enhanced by labeling tackifiers with dye compounds. Improved solubility/compatibility also enables formulating at higher dye concentration, allowing for stronger absorptive properties in the solvent or polymeric systems. Compositions, such as adhesives, coating and inks, containing dye-labeled tackifiers show improved compatibility between the product matrix and the dye, increased stability of dye in product, and a decrease in dye release to the environment. Compositions, such as thermoplastic materials, containing dye-labeled tackifiers of this invention overcome the prior art problems associated with the use of radiation to promote heating.

One embodiment of the invention is directed to a tackifying resin covalently bound to a dye, also referred to herein as a dye-labeled tackifier. In one preferred embodiment, the dye embodiment, the dye absorbs radiant energy. Particularly preferred radiation absorbing dyes are near infrared (NIR) absorbing dyes. One preferred tackifier that can be used in the practice of the invention is a rosin derived tackifier.

Another embodiment of the invention is directed to a composition comprising a tackifying resin covalently bound to a dye. Encompassed are composition comprising at least one dye and at least one tackifying resin, wherein at least one of tackifying resin is covalently bonded to at least one dye. Compositions encompassed by the invention include adhesives, printing inks and coatings.

Still another embodiment of the invention is directed to a substrate, wherein at least a portion of the substrate is coated with a composition comprising a tackifying resin covalently bound to a dye. One aspect of this embodiment is a hot melt adhesive present on a substrate surface that is activated upon exposure to radiant energy.

Yet another embodiment of the invention is directed to a method for preparing a dye-labeled tackifying resin, said method comprising attaching a dye-precursor fragment to a tackifying resin under conditions sufficient to covalently attach the precursor to the tackifying resin and, thereafter, assembling the dye.

### BRIEF DESCRIPTION OF THE DRAWING FIGURES

Figure 1 is a UV-Vis absorption spectrum of the squaric acid dye-labeled rosin (Compound 1) synthesized in Example 1.
Figures 2a-2d show UV and emission spectra of the abietic acid ester (solid line) and its precursor (dashed line) in THF solution.

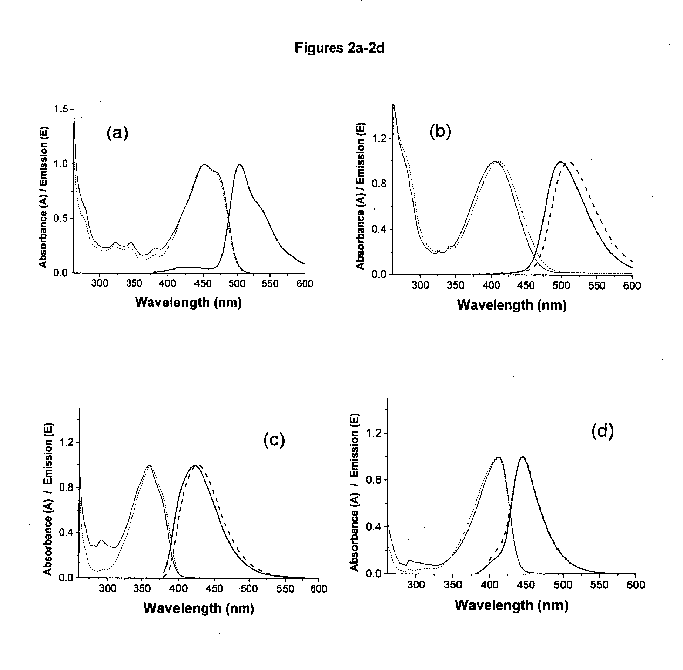

Figure 2a compares a benzothioxathene (compound 9) labeled ester (compound 16).
Figure 2b compares a napthalimide (compound 11) labeled ester (compound17).
Figure 2c compares a napthalimide (compound 12) labeled ester (compound18).
Figure 2d compares a coumarin (compound 14) labeled ester (compound19).

### DETAILED DESCRIPTION OF THE INVENTION

All cited documents are incorporated herein by reference.

This invention is concerned with compositions comprising dyes that are covalently attached to tackifiers. In one preferred embodiment, such dyes are radiation absorbing dyes, even more preferably near infrared radiation absorbing dyes. The use of dye-labeled tackifiers of this invention can increase dye solubility or compatibility and provide an improved means of introducing dyes into products such as inks, adhesives and coatings.

One embodiment of this invention is directed to a labeled tackifier. In a preferred embodiment, the dye is covalently bonded to at least one tackifier.

It is an object of this invention to provide compositions comprising at least one dye covalently attached to at least one tackifier.

In a preferred embodiment dye is a radiation absorbing dye. Even more preferably, the dye is a near infrared radiation absorbing dye.

The present invention also provides a method for preparing a dye-labeled tackifier, such method comprising attaching a dye-precursor fragment to a tackifier under conditions sufficient to covalently bond the precursor to the tackifier and, thereafter, assembling the dye.

One class of preferred tackifiers for use in the invention is rosin acids and their derivatives. Rosin is a mixture of abietic acid isomers. Typical rosin derivatives include polymerized rosin with various molecular weight and softening points, pentaerythritol ester of rosin, glycerol ester of rosin, hydrogenated rosin, as well as others. Derivatives of abietic acids with covalently attached dye chromophores is a particularly

### preferred embodiment.

When mixed with materials such as polymers, some dyes may change their characteristics, lose their thermal stability, or chemically react or dielectrically interact with the materials. One characteristic of the present invention is that the dyes that are covalently attached to tackifiers exhibit improved solubility or compatibility, better stability in mixtures and strong dye characteristics.

The dye-labeled tackifiers of this invention are suitable for addition to compositions, such as coatings and adhesives, to provide application where dye properties are required.

In general, the dye-labeled tackifier compositions of this invention, aid in obtaining and maintaining homogenous mixtures of resinous component and dye, and increase the rate and ease of solubilizing the dye in the resinous component and therefore the rate and ease of its dispersion. Therefore, the dye-labeled tackifier acts effectively as a dye solubilizer and dispersant. Surprisingly, the dye-labeled tackifier of this invention also increases the concentration of the dye that is attainable in the resinous component.

A further feature of this invention is that the dye-labeled tackifiers reduce dye toxicity and have environmentally-friendly characteristics through suppressing release of the dyes into the environment.

Dyes that are particularly useful in the practice of this invention include dyes that have functional groups that permit precursor fragments to be covalently bonded to molecules used as tackifiers, or that can be synthesized from precursor fragments having a functional group that allows such precursor fragments to be covalently bonded to molecules used as tackifiers. Examples of functional groups include epoxy, carboxylic acid, hydroxy, thiol, isocyanate, capped isocyanate, amide, amine, aceto acetate, methylol, methylol ether, oxazoline, carbamate, and beta-hydroxyalkylamide.

Non-limiting examples of dyes having functional groups include:
(a) Red #40 (Allura red AC); CAS# 25956-17-6, which has the structure: 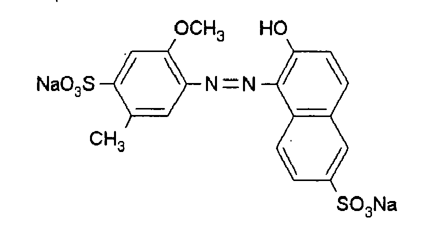
(b) Yellow #5 (Tartrazine); CAS# 1934-21-0, which has the structure: 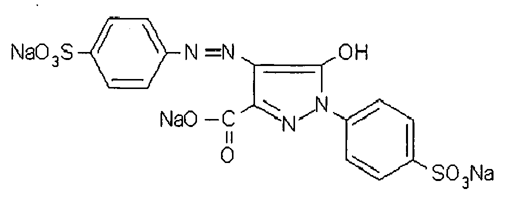
(c) Green #8 (Solvent green 7); CAS# 6358-69-6, which has the structure: 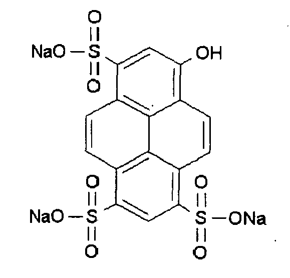
(d) Violet #2 (Solvent violet 13, alizurol purple); CAS# 81-48-1, which has the structure: 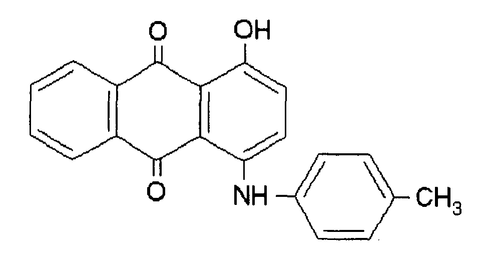
(e) Mauveine, which has the structure: 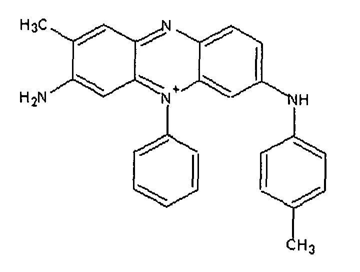
(f) Crocetin, which has the structure: 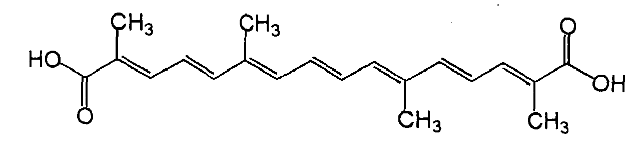
(g) Vitamin A, which has the structure: 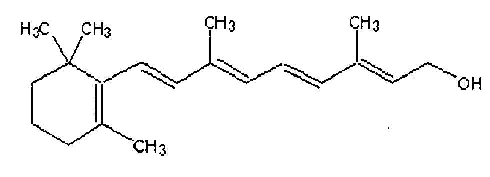
(h) Cyanadine, which has the structure: 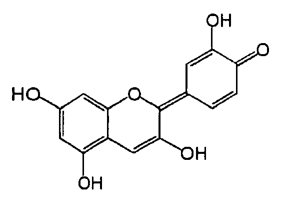
(i) Methyl Red; CAS# 63451-28-5, which has the structure: 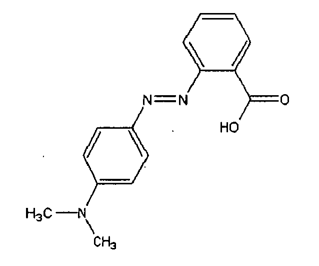
(j) Oil Red O; CAS# 1320-06-5, which has the structure: 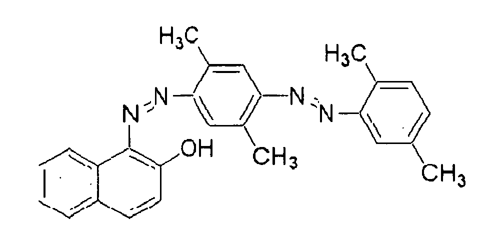
(k) Blankophor B (a stilbene derivative that is a fluorescent dye used in fabric brightening), which has the structure: 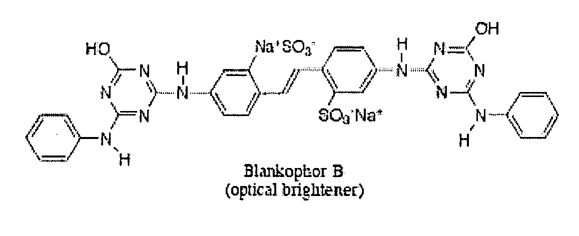
(l) Rhodamine B; CAS# 81-88-9, which has the structure: 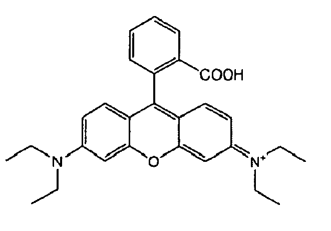 and
(m) Flourescein; CAS# 2321-07-5, which has the structure:

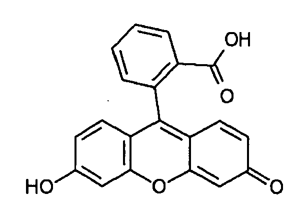

In a preferred embodiment, the dyes used are near infrared radiation absorbing dyes. The use of near infrared radiation absorbing dyes is inherently safer to a human user since less near infrared radiation is required to produce an equivalent amount of light density. Additionally, the use of near infrared radiation sources is advantageous over ultraviolet light sources because of the known degradative effects of ultraviolet light on substrates such as polymers.

A near infrared radiation absorbing dye according to this invention is any dye that is excited by light energy within the range of 700 to 2000 nm.

Tackifying resins, also known as tackifiers, include any compatible resins or mixtures thereof such as (i) natural and modified rosins including gum rosin, wood rosin, tall oil rosin, distilled rosin, hydrogenated rosin, dimerized rosin, and polymerized rosin; (ii) glycerol and pentaerythritol esters of natural and modified rosins, including the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (iii) copolymers and terpolymers of natural terpenes, such as styrene/terpene and alpha methyl styrene/terpene; (iv) polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (v) phenolic modified terpene resins and hydrogenated derivatives thereof such, for example, as the resin product resulting from the condensation, in an acidic medium, of a bicyclic terpene and a phenol; (vi) aliphatic petroleum hydrocarbon resins resulting from the polymerization of monomers consisting primarily of olefins and diolefins; also included are the hydrogenated aliphatic petroleum hydrocarbon resins; and (vii) cyclic petroleum hydrocarbon resins and the hydrogenated derivatives thereof. Mixtures of two or more of the above described tackifying resins may be required for some formulations. Also included are the cyclic or acylic C₅ resins and aromatic modified acyclic or cyclic resins.

Further specific examples of tackifiers include, but are not limited to, the following:

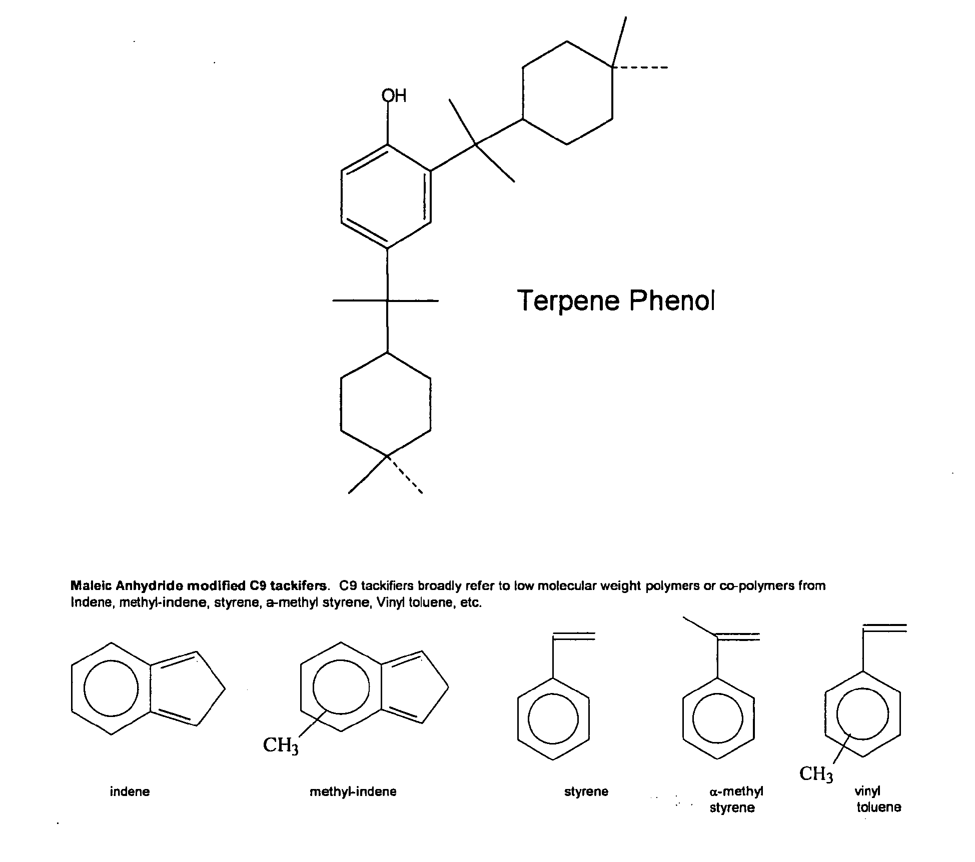

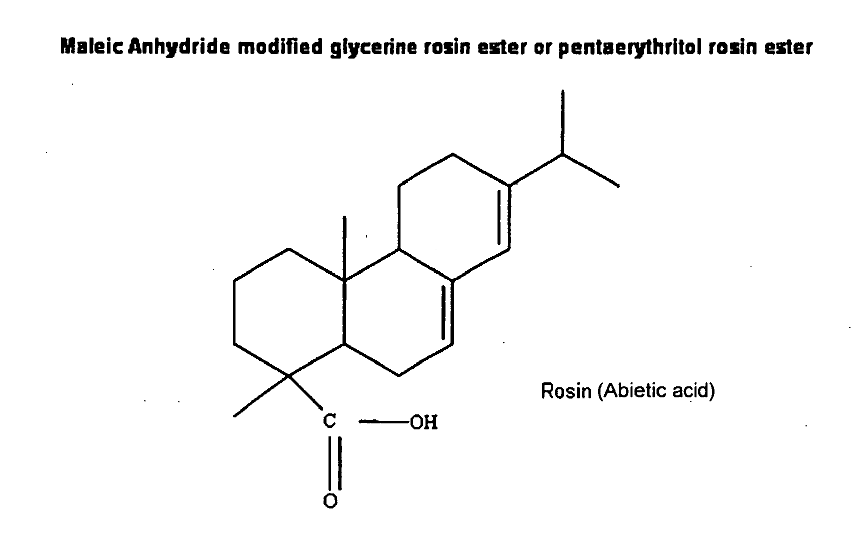

Products using dye-labeled tackifiers of the present invention are advantageous in that the latitude in selecting the desired dyes is extremely broad. Effectively, any dye capable of being assembled from dye-precursor fragments having covalent bonding functionality is usable in this invention.

Dye-labeled tackifier compositions of this invention may also be used with water-dispersible products, such as thermoplastic or thermoset water-borne adhesives, to provide light absorption and color and, where the dye is a radiation absorbing dye, to assist with the drying process.

General uses for radiation absorbing dye-labeled tackifiers of this invention include sealants, adhesives, pressure sensitive adhesives, elastic adhesives, coatings, powder coatings, foams, electric/electronic potting materials, films, gaskets, resists, various molding materials, photomodeling materials, and so on. They may, without limitation, be used also with water-dispersible products, such as thermoplastic or thermoset water-borne adhesives, to provide light absorption and color and to assist with the drying process.

In the case of tackifiers labeled with radiation absorbing dyes, the tackifier can serve as a thermal transducer. It can absorb near infrared radiation, from, for example, diode lasers, broadband lamps, halogen-tungsten lamps etc., and through radiationless decay, convert the excitation energy into heat.

As such, radiation absorbing dye-labeled tackifiers according to this invention can be used in applications where it is required to cause a thermoplastic material to melt or to soften, for example a hot-melt composition.

Hot-melt compositions are thermoplastic materials that can be applied in melt form and, when cooled, can form a solid bond line. Upon contact with a substrate, hot melt compositions can cool, solidify, and form a strong bond on the substrate surface or between an object and the substrate surface. Hot-melt compositions can be pressure-sensitive depending upon formulation.

The hot melt composition may, for example, be a phase change ink, such as a hot melt ink for an ink jet printer or a hot-melt adhesive or a coating. Additionally, the composition comprising the radiation absorbing dye-labeled tackifier of this invention may be incorporated into a thermal printing or recording composition, medium, article, device, or method.

The incorporation of radiation absorbing dye-labeled tackifiers of this invention within thermoplastic materials provides a thermoplastic material that can be heated rapidly, homogeneously and economically, and the radiation absorbing dye-labeled tackifiers do not affect the mechanical strength of the thermoplastic materials.

Coating compositions containing radiation absorbing dye-labeled tackifiers according to the invention can be used to produce any desired coating layers, for example to produce primer, base lacquer, surface finishing lacquer, clear lacquer layers. These coatings do not exhibit any compatibility problems between the dye-labeled tackifiers and further constituents of the coatings, either during their production or storage or during or after application of the coating compositions. The coating compositions are stable to storage.

The coating layers can be applied by conventional application methods to any desired substrates, for example of metal, plastics, wood, and glass. Examples of application methods are spread-coating, roller coating, blade coating, dip-coating, but especially spraying. After application, the coating compositions may be dried or cured under the action of radiation.

A non-limiting example of the use of radiation absorbing dye-labeled tackifiers of the present invention is use with adhesives for, for example, laminating layers or articles. The adhesive used for the laminating layers or articles can be activated (melted) on demand indirectly through a variety of colored, opaque, or reflective substrates using, for example, near infrared radiation Additionally, curing can take place at elevated or ambient (20-25°C.) temperatures, which can be advantageous for temperature sensitive substrates.

Activation may be promoted by directing radiation, from a source such as an infrared lamp, through the thermal composition to the radiation absorbing dye-labeled tackifier. The radiation absorbing dye absorbs the radiation and generates sufficient heat to cause melting to occur. In the case of hot-melt adhesives, the present invention provides a means to bond, quickly and conveniently, many different articles to a variety of substrates using radiation activation.

The method of activating/melting compositions comprising radiation absorbing dye-labeled tackifiers of this invention is not particularly restricted. The method can be judiciously selected from among the various techniques such as, but not limited to, irradiation with light using a high-pressure mercury lamp, a low-pressure mercury lamp, an electron beam irradiator, a halogen-vapor lamp, a light-emitting diode, or a semiconductor laser.

Additionally, the radiation absorbing dye-labeled tackifier compositions of this invention may be employed as monomers or oligomers in polycondensation or polyaddition reactions to assist with the curing process.

The amount of radiation absorbing dye-labeled tackifier used in compositions of this invention may be just sufficient to make the composition slightly photofunctional and is not particularly restricted. However, the range of 0.001 to 10 parts by weight per 100 parts by weight of composition is preferred.

In general, the incorporation of radiation absorbing dye-labeled tackifiers into a thermoplastic material may be accomplished by any known technique that enables an additive to be incorporated within a composition of polymer materials. The radiation absorbing dye-labeled tackifiers may be incorporated by cold mixing with one or more of the constituents of the thermoplastic material, in the powder state. The powder blend may be used as it is, or it may be pressed or extruded in order to form semi-finished products, such as fibers, panels, sheets, films, granules, etc.

Compositions comprising dye-labeled tackifier compositions of this invention may contain a wide variety of adjuvants depending upon the desired end use. Suitable adjuvants include solvents, diluents, resins, binders, plasticizers, pigments, inorganic or organic reinforcing or extending fillers, thixotropic agents, indicators, inhibitors, stabilizers, and the like. The amounts and types of such adjuvants, and their manner of addition to a composition of the invention will be familiar to those skilled in the art.

### EXAMPLES

The following example 1 is based upon the general structure 1.

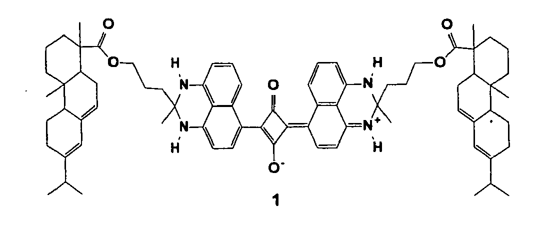

In this structure, a dye is covalently linked to abietic acid, a rosin-acid type tackifier. Examples included are of near infrared and fluorescent dyes, but this invention applies to all dyes and tackifier molecules possessing a functional group able to act as a covalent handle. In abietic acid, the covalent attachment is through the ester group. The spacer can be as short as two carbon atoms but may be longer to facilitate or enhance the solubility of the dye-tackifier combination in the medium or vehicle of the intended application. Two non-limiting methods to prepare dye-labeled tackifiers are described herein.

### EXAMPLE 1

### PREPARATION OF NIR DYE-LABELED ROSIN TACKIFIER (1)

A synthetic approach for dye-labeled tackifier is to link an abietic acid molecule directly to a functional dye, which possesses an active functional group such as a hydroxyl or amino group. However, some functional dyes are difficult to synthesize, and/or have poor solubility in common organic solvent, which makes it very challenging to attach them directly to abietic acid. In this case, the desired dye-tackifier molecules may be created by converting the abietic acid molecule into a dye precursor. An example is the near infrared (NIR) sensitive squaric acid dye derivative **1** (Scheme 1).
The compound was prepared in three steps, and abietic acid was introduced to the system as a precursor in the first step. For these dyes it is possible to attach one or two abietic acid moieties. Dyes containing two abietic acid groups are expected to have enhanced solubility over dyes that contain only one such group.

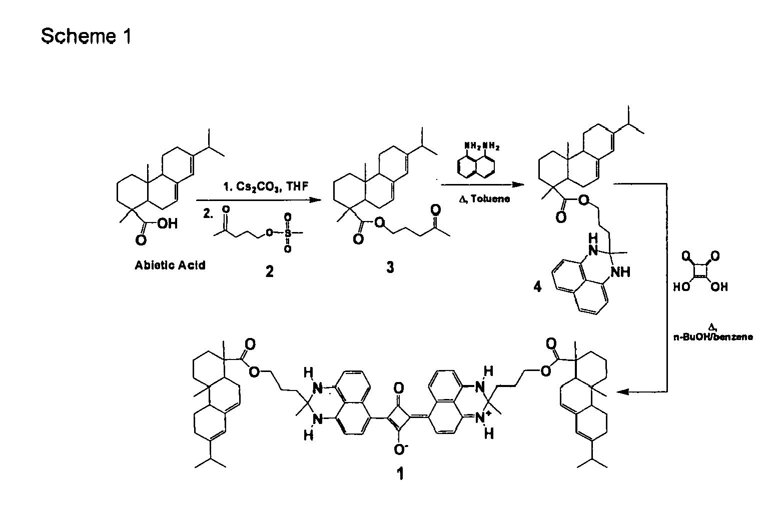

### Synthesis of 5-(Methylsulfonly)oxy-2-pentanone (2)

To a round bottom flask was added 30 mL of methylene chloride and 3 g (3.0 mmol) of 5-hydroxy-2-pentanone (Aldrich). To this solution was added 3.1 g (3.1 mmol) triethylamine, and 3. 6 g (3.1 mmol) of methanesulfonylchloride (Alridch). The resulting mixture was stirred overnight. The precipitate was filtered, and washed with methylene chloride. The filtrate was concentrated *in vacuo.* The residue was used without any further purification.

### Synthesis of 4-Oxopentyl ester of abietic acid (3)

To a solution of abietic acid (9.0 g, 30 mmol, Aldrich) in 100 mL dry THF was added 23 g of Cs₂CO₃ (75 mmol, Aldrich). The brown mixture was stirred at room temperature for 2 hour. A solution of compound **2** (5-(methylsulfonyl)oxy-2-pentanone) in THF was added dropwise to this brown solution. The resulting mixture was refluxed for 24 h. The mixture was allowed to cool to room temperature. The residue was separated by filtration and washed with ether. The residue was collected. The filtrate (organic layer) was concentrated *in vacuo.,* and the residue was re-dissolved in diethyl ether, then washed with water twice. The aqueous layers were combined and saved. The organic layer was dried over Na₂SO₄, and then concentrated *in vacuo.* The brown oil was then chromatographed on silica gel (0-20 % Et₂O/hexanes; column size: height 18-20 cm, diameter 5 cm) to afford 4.2 g of pale yellow oil (overall yield = 36 %). ¹H NMR (CDCl₃, 300 MHz) δ 5.76 (1 H, s), 5.34 (1H. s), 4.01-4.07 (2H, m), 2.58-2.52 (m, 2H), 2.22 (1 H, m), 2.15 (3H, s), 2.12-1.48 (15 H, m), 1.26-1.21 (8H, m), 1.02-0.96 (5H, m), 0.92-0.82 (5H, m); ¹³C NMR (CDCl₃, 300 MHz) δ 207.28, 178.35, 145.31, 135.57, 122.34, 120.43, 63.58, 50.92, 46.57, 45.19, 39.87, 38.30, 37.14, 34.85, 34.51, 31.55, 29.94, 27.42, 25.65, 22.62, 21.37, 20.82, 18.09, 16.98, 14.08; MS (El) calculated mass for C₂₅H₃₈O₃ = 386.2821; found = 386.2819
Unreacted abietic acid was recovered from the reaction. To the combined aqueous layer was added the solid residue obtained from filtration, and the solution was acidified with conc. HCl. The mixture was extracted with ether. After drying over Na₂SO₄, the solvent was removed *in vacuo.* to afford about 3.5 g of unreacted abietic acid. The yield of the reaction based on reacted abietic acid = 58 %.

### Synthesis of Dihydroperimidine (4)

The general method of Kim et al. (as published in "Dyes and Pigments" 2002, 55, pp1-7) for the synthesis of dihydroperimidines was employed. To a 250 mL round bottom flask was charged 1.4 g of 1,8-diaminonaphthalene (9.0 mmol, Aldrich), an equimolar of compound **3** (3.5 g, 9.0 mmol), 15 mg of p-toluenesulfonic acid, and 65 mL of toluene. The mixture was refluxed under nitrogen for 3 h and water was removed azeotropically by a Dean-Stark trap. The reaction mixture was washed with 20 mL of saturated sodium bicarbonate, followed by brine (2X). The organic layer was dried over sodium sulfate and then concentrated *in vacuo.* The residue was chromatographed on silica gel (0-30 % ethyl acetate in hexanes) to afford 3.5 g of pink powder (yield = 75 %) mp 65-66°C. ¹H NMR (400 MHz, CDCl₃) δ 7.23-7.12 (4H, m), 6.46-6.42 (2H, m), 5.77 (1H, s), 5.34 (1 H, m), 4.40 (2H, b), 4.02 (2H, m), 2.28-1.48 (22 H, m), 1.39-0.80 (14 H, m); ¹³C NMR (125 MHz, CDCl₃) δ 178.38, 145.48, 139.80, 135.68, 134.61, 127.08, 122.37, 120.48, 117.04, 105.87, 66.26, 64.08, 50.98, 46.54, 45.10, 38.29, 37.05, 37.01, 34.88, 34.51, 27.45, 27.08, 25.66, 23.49, 22.64, 21.40, 20.83, 18.08, 16.95, 14.02; MS (El) calculated mass for C₃₅H₄₆N₂O₂ = 526.3559; found: 526.3569.

### Synthesis of NIR dye-labeled rosin tackifier- Squaraine Dye (1)

The procedure of de Wit *et al.* (US5395910, to Akzo Nobel N. V., Publication date: March 7, 1995) was employed. To a 100 mL of round bottom flask was added 3.2 g (6.0 mmol) of dihydroperimidine **4**, 0.35 g (3.0 mmol) of squaric acid (Aldrich), and 120 mL of *n*-butanol/benzene (3:1/v:v). The mixture was heated under reflux for 3 h and water was removed azeotropically by using a Dean-Stark trap. The reaction mixture was then concentrated *in vacuo* and the residue was diluted by 200 mL of hexanes. The product was filtered and washed with ether. Most of the green powder obtained was used without further purification (yield = 3.1g, 90 %). mp 103°C; ¹H NMR (400 MHz, CDCl₃) 7.95 (1 H, m), 7.31-7.27 (1H, m), 6.87 (1 H, m), 6.76 (1 H, m), 6.41 (1 H, m), 5.72 (1H. s), 5.31 (1 H, m), 4.12-4.02 (2H, m), 2.28-1.41 (22 H, m), 1.39-0.80 (14 H, m): ¹³C NMR (125 MHz, CDCl₃) δ 183.83, 178.43, 149.87,145.44, 143.22, 137.36, 135.75, 133.21, 125.19, 122.41, 122.34, 120.54, 117.89, 117.23, 110.80, 109.87, 108.60, 67.82, 63.88, 50.95, 46.54, 45.11, 38.29, 37.57, 37.10, 34.88, 34.53, 27.42, 27.08, 25.66, 23.97, 23.36, 22.47, 21.40, 20.85, 18.11, 16.97, 14.04; MS (MALDI) M⁺ = 1130; IR (KBr, cm⁻¹) 3349, 2923, 1720, 1618, 1454, 1362, 1125, 817; UV-NIR (THF) λₘₐₓ = 810 nm, ε = 1.1 x 10⁵ M⁻¹cm⁻¹ (~ 90 % pure when compared to the ε of standard dye 5) TLC analysis shows mainly one spot (Rf value = 0.4 in 40 % EtOAc in hexanes). A tiny spot is observed on the baseline.

A small portion of the sample was chromatographed on silica gel (40 % EtAc/Hexanes). The spectroscopic data of the pure and crude product are similar, while the extinction coefficient of the purified sample is 1.34 x 10⁵ M⁻¹cm⁻¹. Based on the difference in extinction coefficients, the purity of the crude product was estimated to be 90 %.

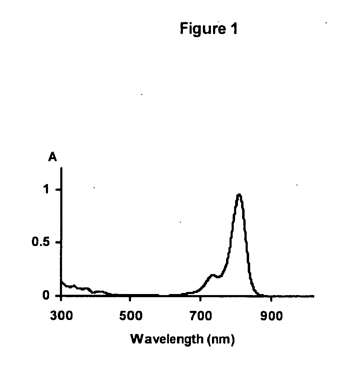

The Vis-NIR spectrum of dye 1 in THF is presented in Figure 1A. There is a strong NIR absorption at 810 nm.

### EXAMPLE 2

### PREPARATION OF FLUORESCENT DYE-LABELED TACKIFIER DERIVATIVES (16), (17), (18) AND (19)

Some functional dyes are more accessible and have good solubility in common organic solvents. In this case, direct linkage between the dye and abietic acid can be accomplished by using a suitable spacer. In these examples this method was used to prepare several fluorescent dye-labeled abietic acid derivatives (Scheme 2). The absorption spectra of the derivatives from this experiment are compared to those of their precursors respectively in Figure 2.

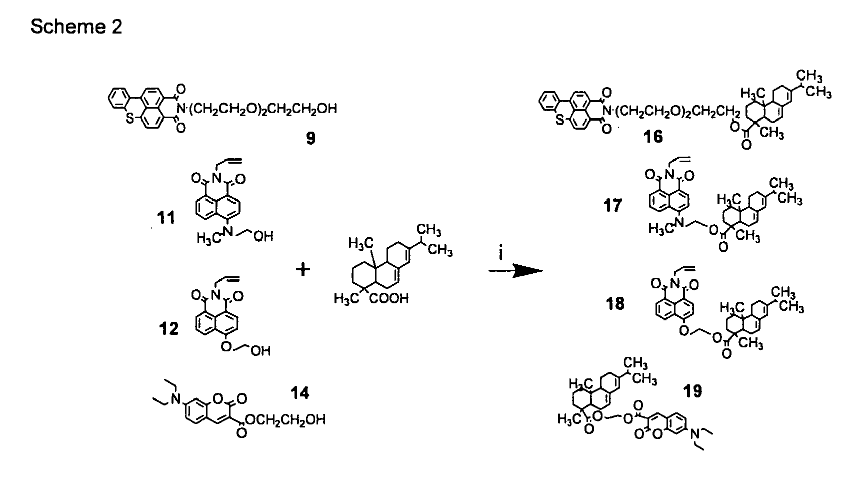

### EXAMPLE 2A

### PREPARATION OF FUNCTIONAL DYE DERIVATIVES (11), (12) AND (14).

### Synthesis of 2-Allyl-6-[(2-hydroxyethyl)methylamino]benzo[de] isoquinoline-1,3-dione (11)

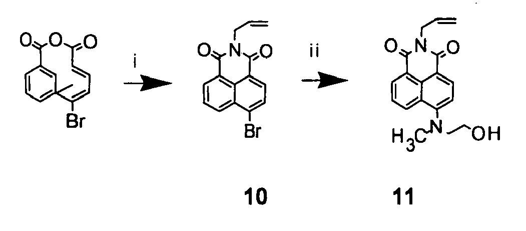

i) CH₂=CHCH₂NH₂, MeOH, reflux , 4 hrs;
ii) CH₃NHCH₂CH₂OH, DMSO, 80°C, overnight;

*N*-Allyl-4-bromo-1,8-naphthalimide (**10**, 0.79g, 2.5mmol) and 2-(methylamino)ethanol (0.188g, 2.5mmol) were dissolved in dimethylsulfoxide (10mL) and stirred at 80°C overnight. The resulting solution was then poured into ice (ca. 25g), and ca. 2g of sodium chloride was to precipitate the title compound **11** as orange-yellow crystals (washed with water and dried in an oven at 80°C overnight; R_{f} = 0.27 (ethyl acetate : hexanes = 2:3); R_{f} = 0.28 (ethyl acetate : hexanes = 1:1)}, mp. 90-91°C (0.63g, yield 81.2%). ¹H NMR (300MHz, DMSO-d₆) δ_{H} 8.71 (d, 1H, J = 8.4Hz, ArH), 8.43 (d, 1H, J = 7.2Hz, ArH), 8.32 (d, 1H, J = 8.4Hz, ArH), 7.74 (t, 1 H, J = 7.8Hz, ArH), 7.29 (d, 1 H, J = 8.4Hz, ArH), 5.97-5.87 (m, 1 H, CH=), 5.13 (d, 1H, J = 3.9Hz, =CH₂), 5.08 (s, 1H, =CH₂), 4.89 (t, 1H, J = 5.2Hz, disappear upon addition of D₂O, OH), 4.64 (d, 2H, J = 4.8Hz, NCH₂), 3.76 (q, 2H, J = 5.4Hz, MeNCH₂), 3.44 (t, 2H, J = 5.7Hz, CH₂O) and 3.07 (s, 3H, NCH₃); ¹³C NMR (75MHz, DMSO-d₆) δ_{c} 163.4, 162.7, 156.9, 133.0, 132.3, 131.7, 130.6, 129.7, 125.0, 124.7, 122.2, 116.1, 114.1. 113.3, 59.3, 58.3 and 41.4. HRMS: 310.1312; Calcd. C₁₈H₁₈N₂O₃: 310.1317.

### Synthesis of 2-Allyl-6-(2-hydroxyethoxy)-benzo[de]isoquinoline-1,3-dione (12)

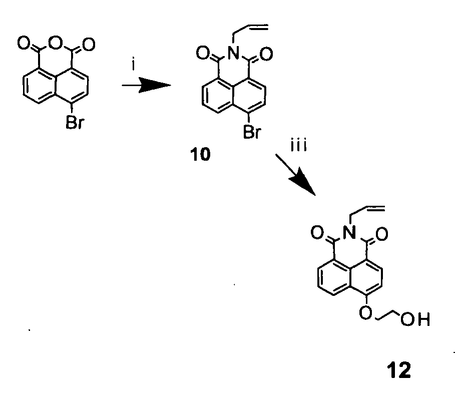

i) CH₂=CHCH₂NH₂, MeOH, reflux , 4 hrs;
iii) KOH, HOCH₂CH₂OH, 140°C, 4 hrs.

*N*-Allyl-4-bromo-1,8-naphthalimide (**10**, 0.79g, 2.5mmol) in ethylene glycol (15 mL) was heated at 140°C in the presence of 2.5 mmol (0.14g) of potassium hydroxide for 4 hours. After the reaction solution was cooled to room temperature, water (50 mL) was added and the aqueous solution was extracted with chloroform. The organic layer was washed with water, dried over anhydrous sodium sulfate and evaporated under reduced pressure. The residue was purified by silica gel column chromatography (hexanes / ethyl acetate =1:1 in volume ratio, R_{f} = 0.17) to give pure title compound 12 as gray crystals, mp. 144-145°C (0.60g, yield 80.5 %). ¹H NMR (300MHz, CDCl₃) δ_{H} 8.54-8.50 (m, 2H, ArH), 8.48 (d, 1H, J = 7.2Hz, ArH), 7.63 (t, 1 H, J =7.5Hz, ArH), 7.01 (d, 1 H, J = 8.1 Hz, ArH), 6.06-5.93 (m, 1 H, CH=), 5.35 (d, 1H, J = 19.5Hz, =CH₂), 5.22 (d, 1H, J = 7.8Hz, =CH₂), 4.78 (d, 2H, J = 5.4Hz, NCH₂), 4.40 (t, 2H, J = 3.9Hz, OCH₂), 4.19 (d, 2H, J = 3.9Hz, OCH₂) and 2.49 (t, 1H, J = 5.1 Hz, disappear upon addition of D₂O, OH). ¹³C NMR (75MHz, CDCl₃) δ_{C} 164.3. 163.8, 160.1, 133.6, 132.5, 131.9. 129.5. 128.7. 126.2, 123.5, 122.4, 117.7, 115.3, 106.2, 70.6, 61.4 and 42.5. HRMS: 297.1000, Calcd. C₁₇H₁₅NO₄: 297.1001.

### Synthesis of 7-Diethylamino-2-oxo-2H-chromene-3-carboxylic acid 2-hydroxyethyl ester (14)

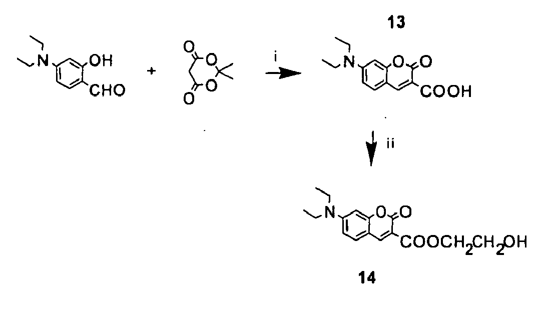

i) a) dry EtOH, catalytic amount of piperidinium acetate, room temperature, 48hrs; b) reflux, overnight
ii) HOCH₂CH₂OH, cat. amount of H₂SO₄, 100°C, Ar, overnight.

To a solution of 7-diethylamino-2-oxo-2H-1-benzopyran-3-carboxylic acid (**13**, 1.04 g, 4.0 mmol) in ethylene glycol (25 mL, about 0.362 mol) was added several drops of concentrated sulfuric acid. Under argon atmosphere, the mixture was stirred at 100°C overnight. After the reaction solution was cooled to room temperature, saline (25 mL) was added, and the aqueous solution was extracted with dichloromethane (3x100 mL). The organic phase was collected, washed with saline (10 mL) and dried over Na₂SO₄. After the solvent was removed under reduced pressure, the residue was purified by chromatography (silica gel; eluent: ethyl acetate), giving title compound **14** (1.05 g, yield 86%), as a yellow paste, which slowly crystallized on drying in *vacuo,* mp. 106-108°C (yellow crystals). ¹H NMR (300MHz, CD₃OD) δ_{H} 8.47 (s, 1H, ArH), 7.34 (d, 1H, J = 9.0 Hz, ArH), 6.62 (dd, 1 H, J = 6.3, 2.4 Hz, ArH), 6.43 (d, 1H, J = 2.4 Hz, vinylic), 4.45-4.42 (m, 2H, OCH₂), 3.97-3.92 (m, 2H, OCH₂), 3.52 (t, 1H, J = 6.3 Hz, disappear upon addition of D₂O, OH), 3.44 (q, 4H, J = 6.9 Hz, PhNCH₂) and 1.23 (t, 6H, J = 7.2 Hz, CH₃); ¹³C NMR (75MHz, CD₃OD) δ_{c} 164.8, 158.8, 158.6, 153.2, 149.9, 131.4, 109.9, 108.4, 107.9, 96.7, 67.1, 61.0, 45.2 and 12.5; HRMS: 305.1263, Calcd. C₁₆H₁₉NO₅: 305.1263.

### EXAMPLE 2B

### PREPARATION OF FLUORESCENT DYE LABELED ROSINS (16), (17), (18) AND (19).

### General Procedure:

(i) To a solution of alcohol (**9, 11, 12** or **14,** 1.0 mmol) in dichloromethane (25 mL) was added triethylamine (**105.2** mg, 0.14 mL, 1.04 mmol) and methanesulfonylchloride (120 mg, 1.04 mmol). The mixture was stirred at room temperature overnight. Then, the solvent was stripped off in *vacuo,* and the residue was used without any further purification.
(ii) - To a solution of abietic acid (0.404 g, 1.0 mmol) in THF (5 mL) was added cesium carbonate (0.77g, 2.5 mmol), and the brown mixture was stirred at room temperature for two hours.
(iii) A solution of compound from Synthesis (a) in THF was added dropwise to the brown solution from Synthesis (b), and the resulting mixture was refluxed for 24 hours. The solvent was stripped off in *vacuo.*

The following Fluorescent Dye-Labeled Rosins (**16**), (**17**), (**18**) and (**19**) were obtained.

Fluorescent Dye-Labeled Rosin (**16**): 7-lsopropyl-1,4a-dimethyl-1,2,3,4,4a,4b,5,6,10, 10a-decahydro-phenanthrene-1-carboxylic acid 2-{2-[2-(1,3-dioxo-3a, 12b-dihydro-1H,3H-6thia-2-aza-benzo[a] pyeren-2-yl)ethoxy]ethoxy}ethyl ester

The residue was chromatographed on silica gel (eluent: chloroform : hexanes = 1:3) to afford 0.216 g (yield 30 %, the first orange band) of title compound **16**, as orange crystals mp. 295°C (dec.). ¹H NMR (300MHz, CDCl₃) δ_{H} 8.56 (d, 1H. J = 8.1 Hz, ArH), 8.37 (d, 1H, J = 8.1 Hz, ArH), 8.16 (t, 2H, J = 8.4Hz, ArH), 7.49 (d, 1H. J = 2.4Hz, ArH), 7.35 (s, 2H, ArH), 7.26 (d, 1H, J = 2.4Hz, ArH), 5.74 (s, 1H. >C=CH-cyclo), 5.36 (s, 1H. >C=CH-cyclo), 4.42 (t, 2H, J = 6.0 Hz, OCH₂), 4.22-4.09 (m, 2H, OCH₂), 3.82 (t, 2H, J =6.0 Hz, OCH₂), 3.69 (t, 2H, J = 2.4 Hz, OCH₂), 3.62-3.61 (m, 2H, OCH₂), 2.85-2.81 (m, 2H, OCH₂), 2.24 (t, 2H, J = 13.2 Hz, cyclo-CH₂), 1.90-1.00 (m, 12H, cyclo-CH₂+CH), 1.61 (s, 3H, CH₃) and 1.22-1.15 (m, 9H, CH₃); ¹³C NMR (75MHz, CDCl₃) δ_{c} 178.7. 164.1, 163.7, 145.9. 140.8. 136.9, 132.8. 131.8, 131.0, 130.6, 130.2, 128.1, 127.8, 127.1, 126.6, 126.3, 125.7, 124.4, 124.1, 121.3, 120.6, 119.4, 118.2, 70.7, 70.3, 69.3, 68.1, 63.7, 59.1, 47.8, 44.9, 39.3, 38.1, 37.1. 36.7, 34.7, 33.6, 30.3, 27.6, 25.4, 24.2, 21.9, 18.8 and 16.7; HRMS: 719.3274, Calcd. C₄₄H₄₉NO₆S: 719.3281.

Fluorescent Dye-Labeled Rosin (**17**): 7-lsopropyl-1,4a-dimethyl-1,2,3,4,4a,4b,5,6,10,10a-decahydro-phenanthrene-1-carboxylic acid 2-[(2-allyl-1,3-dioxo-2,3-dihydro-1H-benzo[de]isoquinolin-6-yl) methylamino] ethyl ester

The residue was chromatographed on silica gel (eluent: chloroform : hexanes : ethyl acetate = 1:8:1) to afford 0.47 g (yield 79 %) of title compound **17**, as yellow crystals mp. 64-66°C. ¹H NMR (300MHz, CDCl₃) δ_{H} 8.56 (d, 1 H, J = 7.2Hz, ArH), 8.49 (t, 2H, J = 7.2Hz, ArH), 7.66 (t, 1 H, J = 7.2Hz, ArH), 7.23 (d, 1H, J=8.1Hz, ArH), 6.08-5.90 (m, 1H, CH=), 5.72 (s, 1H, >C=CH-cyclo), 5.33 (d, 1H, J = 17.1Hz, >C=CH-cyclo), 5.21 (d, 2H, J = 10.5 Hz, =CH₂), 4.79 (d, 2H, J = 5.4 Hz, NCH₂), 4.38-4.30 (m, 2H, NCH₂), 3.63 (d, 2H, J = 5.4 Hz, OCH₂), 3.09 (s, 3H, PhNCH₃), 2.04-1.59 (m, 14H, cyclo-CH₂+CH), 1.18 (s, 3H, CH₃), 1.00 (dd, 6H, J = 4.8, 2.1, CH₃) and 0.77 (s, 2H, CH₃); ¹³C NMR (75MHz, CDCl₃) δ_{c} 178.5, 164.4, 163.8, 156.5, 145.7, 135.8, 132.7, 132.6, 131.4, 131.1, 130.4, 126.2, 125.6, 123.2, 122.5, 120.4, 117.5, 116.1, 115.5, 61.4, 55.5, 51.1, 46.8, 45.3, 42.4, 41.9, 38.4, 37.1, 35.1, 34.7, 27.6, 25.8, 22.6, 21.6, 21.0, 18.2, 17.1 and 14.1; HRMS: 594.3464, Calcd. C₃₈H₄₆N₂O₄: 594.3458.

Fluorescent Dye-Labeled Rosin (**18**): 7-Isopropyl-1,4a-dimethyl-1,2,3,4,4a,4b,5,6,10,10a-decahydro-phenanthrene-1-carboxylic acid 2-(2-allyl-1,3-dioxo-2,3-dihydro-1H-benzo[de]isoquinolin-6-yloxy)ethyl ester

The residue was chromatographed on silica gel (eluent: chloroform / hexanes / ethyl acetate = 1:3:1 ) to afford 0.251 g (yield 43 %) of title compound **18**, as a pale-yellow paste. ¹H NMR (300MHz, CDCl₃) δ_{H} 8.63-8.50 (m, 3H, ArH), 7.75-7.62 (m, 1 H, ArH), 7.05 (dd, 1 H, J = 6.6, 1.8 Hz, ArH), 6.06-5.93 (m, 1 H, - CH=), 5.77 (s, 1H, >C=CH-cyclo), 5.38 (s, 1 H, >C=CH-cyclo), 5.33 (d, 1H, J = 17.1 Hz, =CH₂), 5.22 (d, 1H, J = 10.2 Hz, =CH₂), 4.79 (d, 2H, J = 5.1 Hz, NCH₂), 4.69-4.59 (m, 2H, OCH₂), 4.49 (s, 2H, OCH₂), 2.08-1.23 (m, 15H, cyclo-CH₂+CH), 1.20 (s, 3H, CH₃), 0.99 (dd, 6H, J = 3.9, 3.0, CH₃) and 0.83 (s, 1H, CH₃); ¹³C NMR (75MHz, CDCl₃) δ_{C} 178.6, 164.4, 163.8, 159.9, 142.2, 134.7, 133.6, 132.6, 132.0, 129.7, 129.0, 128.9, 128.8, 126.4, 125.1, 124.3, 123.7, 117.6, 106.1, 71.7, 67.3, 67.1, 62.5, 48.5, 46.4, 45.0, 43.7, 42.5, 38.9, 38.0, 37.8, 27.2. 31.8, 29.1, 17.9. 16.8 and 14.7; MS {El}: 580, Calcd. C₃₇H₄₃NO₅-H: 580.

Fluorescent Dye-Labeled Rosin (**19**): 7-Diethylamino-2-oxo-2H-chromene-3-carboxylic acid 2-(7-isopropyl-1,4a-dimethyl-1,2,3,4,4a,4b, 5,6,10,10a-decahydro-phenanthrene-1-carboxyloxy) ethyl ester

The residue was chromatographed on silica gel (eluent: chloroform / hexanes / ethyl acetate = 1:8:1) to afford 0.272 g (yield 48 %) of title compound **19**, as a brown paste. ¹H NMR (300MHz, CDCl₃) δ_{H} 8.36 (s, 1H. ArH), 7.32 (t, 1 H, J = 9.0 Hz, ArH), 6.59 (dd, 1 H, J = 9.0, 2.4 Hz, ArH), 6.45 (d, 1 H, J = 2.1 Hz, -CH=), 5.66 (s, 1 H, >C=CH-cyclo), 5.26 (s, 1H, >C=CH-cyclo), 4.47 (s, 2H, OCH₂), 4.35-4.15 (m, 2H, OCH₂), 3.44 (q, 4H, J = 7.2 Hz, NCH₂), 2.07-1.57 (m, 11 H, cyclo-CH₂+CH), 1.26 (s, 4H, cyclo-CH₂), 1.24 (s, 6H, CH₃), 1.21 (s, 3H, CH₃), 0.98 (dd, 6H, J = 6.9 Hz, CH₃) and 0.80 (s, 1H, CH₃); ¹³C NMR (100MHz, CDCl₃) δ_{c} 178.4, 163.5, 158.6, 158.2, 153.2, 149.4, 145.2, 135.5, 131.3. 122.5, 120.7, 109.7, 108.2, 107.7, 96.8, 62.7, 62.3, 50.9. 46.7, 45.2, 38.4, 37.2, 34.9, 34.7, 27.4, 25.7, 24.1. 22.6, 21.5, 20.9. 18.2, 17.1, 14.1 and 12.5; HRMS: 589.3395, Calcd. C₃₆H₄₇NO₆: 589.3403.

In Examples 1 and 2, the classes of dyes examined included a squaric acid dye with a strong NIR absorption at 810 nm, a coumarin dye, and several naphthalimide derivative dyes. It was noted that the functional dye derivatives may be synthesized and obtained in high yield. The enhanced solubility or compatibility of the abietic acid ester derivatives of these dyes makes them useful candidates as dyes for organic ink formulations.

### INSTRUMENTATION

UV-vis-NIR absorption spectra were collected by a Perkin Elmer Lambda 2500 spectrometer. Fluorescence spectra were recorded on a SPEX Fluorolog 2.1.2 fluorescence spectrometer. Fluorescence decay curves were measured by the single photon timing technique, using nanosecond excitation pulses. ¹H- and ¹³C-NMR spectra were recorded at 400 or 300 MHz using a Varian XL400 or XL 300 spectrometer. ¹H-NMR measurements were carried out in CDCl₃ or DMSO-d₆. The residual solvent peak of CDCl₃, singlet at 7.26 ppm, and the one of DMSO-d₆, quintet at 2.50 ppm were selected as the reference standards. High-resolution mass spectra were obtained with a VG 70-250S (double focusing) mass spectrometer at 70 eV Melting points were taken on a Fisher-Johns melting point apparatus and are uncorrected.

## Claims

1. A tackifier covalently bonded to a dye.

2. The tackifier of claim 1 wherein said dye is a radiation absorbing dye.

3. The tackifier of claim 1 wherein said tackifier is a rosin derived tackifier.

4. The tackifier of claim 1 comprising a rosin derived tackifier covalently bonded to a dye.

5. A composition comprising the tackifier of claim 1.

6. The composition of claim 5 which is an adhesive.

7. The composition of claim 5 which is an ink.

8. The composition of claim 5 which is a coating.

9. The composition of claim 5 wherein the tackifier comprises a rosin derived tackifier covalently bonded to a dye.

10. A composition comprising at least one dye and at least one tackifying resin, wherein at least one of tackifying resin is covalently bonded to at least one dye.

11. The composition of claim 10, wherein said dye is a radiation absorbing dye.

12. The composition of claim 11, wherein said dye is a near infrared radiation absorbing dye.

13. The composition of claim 10, wherein said composition is a thermosetting composition.

14. The composition of claim 13, wherein said thermosetting composition is a hot-melt composition.

15. The composition of claim 14, wherein a coating obtained by curing said thermosetting composition has a glass transition temperature of less than -30°C.

16. The composition of claim10, wherein the total content of said dye and said tackifying resin is in the range of 0.001 to 10 parts by weight per 100 parts by weight of said composition.

17. A substrate, wherein at least a portion of the substrate is coated with the composition of claim 1.

18. A method for preparing a dye-labeled tackifying resins, said method comprising attaching a dye-precursor fragment to a tackifying resin under conditions sufficient to covalently attach the precursor to the tackifying resin and, thereafter, assembling the dye.
